Europäisches Patentamt

European Patent Office

Office européen des brevets

(19)

(11) Veröffentlichungsnummer : **0 452 616 B1**

(12)

# EUROPÄISCHE PATENTSCHRIFT

(45) Veröffentlichungstag der Patentschrift :
**12.05.93 Patentblatt 93/19**

(51) Int. Cl.⁵ : **F23C 11/02, F23G 5/30, F23L 15/00, F23N 5/00**

(21) Anmeldenummer : **91100683.1**

(22) Anmeldetag : **21.01.91**

(54) **Verfahren zum Verbrennen von festen oder schlammartigen Brennstoffen in einer Wirbelschicht.**

(30) Priorität : **10.03.90 DE 4007635**

(43) Veröffentlichungstag der Anmeldung :
**23.10.91 Patentblatt 91/43**

(45) Bekanntmachung des Hinweises auf die Patenterteilung :
**12.05.93 Patentblatt 93/19**

(84) Benannte Vertragsstaaten :
**AT CH DE FR GB IT LI NL SE**

(56) Entgegenhaltungen :
**VGB KRAFTWERKSTECHNIK, Bd. 69, Nr. 6, Juni 1989, ESSEN DE Seiten 584 - 591; W.DAU-BER, W.BRANDL, B.POOS, K.D.TIGGES: 'ER-STE BETRIEBSERFAHRUNGEN MIT DER CIRCOFLUID-DAMPFERZEUGERANLAGE IM HEIZKRAFTWERK ROEMERBRUECKE, SAAR-BRUECKEN'
PATENT ABSTRACTS OF JAPAN vol. 9, no. 22 (M-354)(1745) 30. Januar 1985 & JP-A-59 167 608 ( BABCOCK HITACHI ) 21. September 1984**

(73) Patentinhaber : **Deutsche Babcock Energie-und Umwelttechnik Aktiengesellschaft Duisburger Strasse 375
W-4200 Oberhausen 1 (DE)**

(72) Erfinder : **Huschauer, Helmuth
Lohstrasse 9
W-4040 Neuss (DE)**
Erfinder : **Heitmüller, Ralf J., Dr.
Heinrich-Heine-Strasse 3
W-4010 Hilden (DE)**

(74) Vertreter : **Müller, Jürgen, Dipl.-Ing.
Deutsche Babcock AG Lizenz- und Patentabteilung Duisburger Strasse 375
W-4200 Oberhausen 1 (DE)**

**Beschreibung**

Die Erfindung betrifft ein Verfahren zum Verbrennen von festen oder schlammartigen Brennstoffen in einer schwach expandierten Wirbelschicht gemäß dem Oberbegriff des Patentanspruchs 1.

Die Erfindung geht von einem Verfahren aus, das in dem Prospekt "Circofluid - ein neues Konzept für Dampferzeuger mit Wirbelschichtfeuerung" der Anmelderin beschrieben worden ist. Bei diesem Verfahren ist die Geschwindigkeit der als Primärluft zugeführten Wirbelluft so bemessen, daß feinere Partikel aus der Wirbelschicht ausgetragen und mit dem Gasstrom mitgeführt werden. Auf diese Weise wird in dem Freiraum über der Wirbelschicht eine Suspensionsdichte von 1 - 2 kg/m³ aufrechterhalten. Die mitgeführten feinen Brennstoffpartikel mit Korngrößen unter 0,4 mm sowie brennbare Gasbestandteile verbrennen im Freiraum. Da nur etwa 60 % der eingebrachten Brennstoffwärme in der Wirbelschicht freigesetzt werden, findet im Freiraum eine beachtliche Wärmefreisetzung statt, nämlich etwa 40 % der Gesamtwärme. Dementsprechend beträgt der Sekundärluftanteil an der gesamten Verbrennungsluft bei Vollastbetrieb ebenfalls rund 40 %. Die Wirbelschichttemperatur wird in dem Prospekt für das Beispiel Steinkohle mit 850 °C angegeben. Sie muß in engen Grenzen konstant gehalten werden, um eine optimale Entschwefelung in der Wirbelschicht zu gewährleisten. Die Temperatur der Wirbelschicht wird eingestellt, indem man eine dosierte Menge abgekühlten Flugstaub zurückführt.

Die Strahlungsheizflächen des Feuerraums sind an die Wärmefreisetzung angepaßt. Die Wärmeübertragung an die Kesselwände wird durch die Größe der wirksamen Heizflächen bzw. durch ihre Abwertung mit Stampfmassen so beeinflußt, daß die Freiraumtemperatur im Bereich von rund 800 bis 950 °C bleibt.

Der Sekundärluftanteil verringert sich bei Teillast, da zur Fluidisierung des Bettes eine etwa gleichbleibende Luftmenge benötigt wird und somit ein größerer Anteil des Brennstoffs im Bett selbst verbrennt. Der Anteil des Brennstoffs, der im Bett verbrannt wird, ist weiterhin vom Brennstoffverhalten selbst abhängig, zum Beispiel von seinem spezifischen Zerreibungsverhalten, Blähverhalten, von seiner Reaktivität, seinem Gehalt an flüchtigen Bestandteilen usw. Da die Wirbelschichtverbrennung für ballasthaltige Brennstoffe besonders geeignet ist, werden neben einer Basisfeuerung, zum Beispiel mit Kohle, oft unregelmäßig weitere Zusatzbrennstoffe aufgegeben, zum Beispiel Gichtgas aus einer Kokerei, Schlamm aus Kohleaufbereitungsanlagen oder Kläranlagen. Besonders ballastreiche Brennstoffe zeichnen sich durch starke Schwankungen in der Brennstoffqualität aus.

Durch Lastwechsel, Änderung der Brennstoffqualität und durch Einsatz von Zusatzbrennstoffen ändert sich bei konstant gehaltener Wirbelschichttemperatur die Temperatur des Freiraums. Wenn die Freiraumtemperatur zu stark abfällt, wird die Zündung der vom Gasstrom mitgeführten Brennstoffpartikel und somit der Ausbrand verschlechtert. Außerdem ergeben sich erhöhte Emissionswerte, insbesondere für Kohlenmonoxid und Schwefeldioxid.

Der Erfindung liegt die Aufgabe zugrunde, daß im Oberbegriff des Anspruchs 1 angegebene Verfahren zu verbessern, so daß bei niedrigen Emissionen ein gleichbleibend guter Ausbrand gewährleistet ist.

Diese Aufgabe wird erfindungsgemäß durch die im Kennzeichen des Anspruchs 1 angegebene Maßnahme gelöst.

Die Ansprüche 2 bis 4 geben die optimalen Temperaturbereiche für die Verfeuerung verschiedener Brennstoffe an. Dabei sollte die Temperaturdifferenz zwischen Freiraum und Wirbelschicht bei Steinkohle vorzugsweise mindestens 100 °C betragen, bei Braunkohle oder Torf mindestens 40 °C und bei Schlamm oder Müll mindestens 30 °C.

Anspruch 5 gibt eine bevorzugte Möglichkeit zur Beeinflussung der Temperatur der Sekundärluft an.

Die Zeichnung dient zur Erläuterung der Erfindung anhand eines schematisch dargestellten Ausführungsbeispiels.

Figur 1 zeigt eine Dampferzeugungsanlage mit Wirbelschichtfeuerung zur Durchführung des Verfahrens gemäß der Erfindung.

Figur 2 zeigt ein Regelschema.

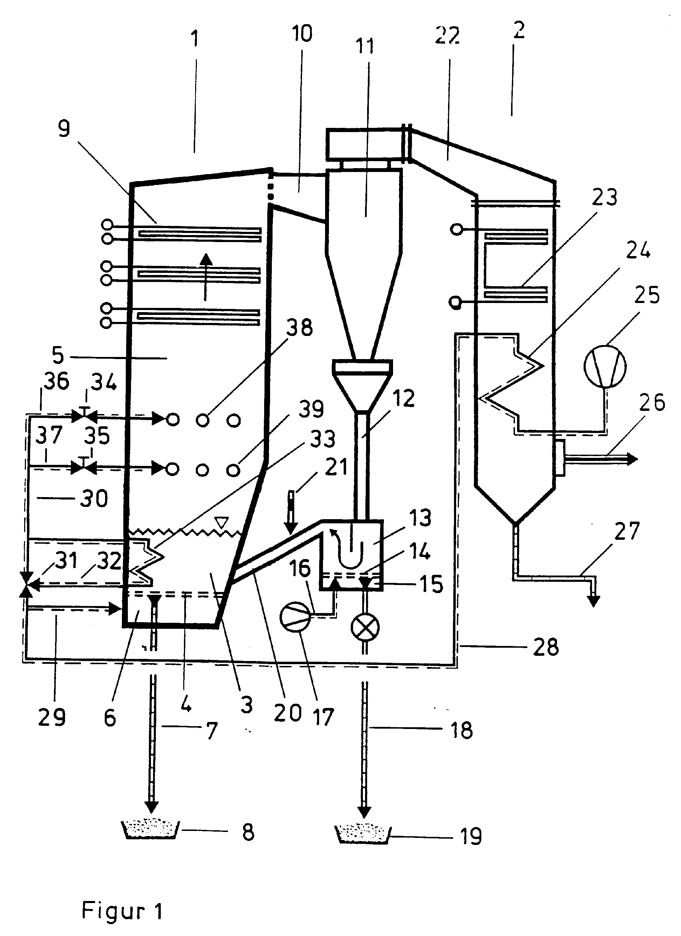

Der in Figur 1 dargestellte Dampferzeuger hat zwei Kesselzüge 1, 2. Der untere Teil des Kesselzugs 1 nimmt die Feuerung auf, bestehend aus einer Wirbelschicht 3 mit Düsenboden 4 und einem Freiraum 5 über der Wirbelschicht 3. Unter dem Düsenboden 4 befindet sich ein Luftkasten 6. Von der Wirbelschicht 3 ist eine Ascheabzugleitung 7 zu einem Bettaschesilo 8 geführt. Oberhalb des Freiraums 5 sind Heizflächen 9 angeordnet. Die Wände des Kesselzugs 1 sind als verschweißte Rohrwände ausgebildet, die im Bereich der Wirbelschicht 3 und des Freiraums 5 zwecks Dämmung der Wärmeabfuhr bestiftet und bestampft sind.

Der obere Teil des Kesselzugs 1 ist durch eine Rauchgasleitung 10 mit einem Zyklon 11 verbunden. Ein von dem trichterförmigen Unterteil des Zyklons 11 ausgehendes Standrohr 12 mündet in einen Siphon 13. Dieser ist als Wirbelbett mit perforiertem Boden 14 und Luftkasten 15 ausgebildet. In den Luftkasten 15 mündet eine Luftleitung 16, die von einem Gebläse 17 ausgeht. Ein Ascheabzugsystem 18 ist von dem Siphon 13 zu einem Aschebunker 19 geführt. An dem oberen Teil des Siphons 13 ist eine Überlaufschurre 20 angeschlossen, die im Bereich der Wirbelschicht 3 in die Feuerung einmündet. In die Überlaufschurre 20 mündet von oben eine Kohlezuführung 21 ein.

Eine von dem Zyklon 11 ausgehende Leitung 22 mündet von oben in den Kesselzug 2, der in seinem oberen Bereich mit Heizflächen 23 ausgestattet ist. Im unteren Teil des Kesselzugs 2 ist ein Luftvorwärmer 24 untergebracht, der eingangsseitig an ein Frischluftgebläse 25 angeschlossen ist. Eine nur angedeutete Rauchgasleitung 26 führt von dem Kesselzug 2 zu einem nicht dargestellten Gewebefilter und weiter über einen Saugzug zu einem Schornstein. Von dem trichterförmigen Boden des Kesselzugs 2 geht ein Fördersystem 27 zum Abführen von Flugasche aus.

Eine an den Ausgang des Luftvorwärmers 24 angeschlossene Verbrennungsluftleitung 28 verzweigt sich in eine Primärluftleitung 29 und eine Sekundärluftleitung 30. Von der Sekundärluftleitung 30 ist über ein Stellorgan 31 eine Bypassleitung 32 abgezweigt. Diese ist über einen Wärmetauscher 33 geführt, der in der Wirbelschicht 3 - vorzugsweise in Wandnähe - angeordnet ist. Stromabwärts von der Einmündung der Bypassleitung verzweigt sich die Sekundärluftleitung 30 in zwei mit Dosierorganen 34, 35 ausgestattete Leitungen 36, 37. Diese sind zu Sekundärluftverteilern 38, 39 geführt, die aus gitterartig angeordneten, perforierten Rohren aufgebaut sind und im unteren Bereich des Freiraums 5 den ganzen Querschnitt des Kesselzugs 1 ausfüllen.

Im Betrieb wird von der im Luftvorwärmer 24 auf etwa 150 °C vorgewärmten Verbrennungsluft ein Teilstrom, der etwa 60 % der Gesamtluftmenge ausmacht, als Primärluft mit einer solchen Geschwindigkeit durch den Düsenboden 4 zugeführt, daß sich eine stationäre, schwach expandierte Wirbelschicht 3 bildet. Das bedeutet, daß zwischen Wirbelschicht 3 und Freiraum 5 ein deutlicher Dichtesprung besteht. In der Wirbelschicht 3 liegt die Suspensionsdichte nur wenig niedriger als die Schüttdichte des Bettmaterials, im Freiraum 5 beträgt sie dagegen nur 1 - 2 kg/m³. Der Dichtesprung ist als ausgeprägte Oberfläche der Wirbelschicht 3 zu erkennen. Der aus der Wirbelschicht 3 ausgetragene Staub enthält Partikel bis zu einer Korngröße von etwa 0,5 mm. Die Temperatur der Wirbelschicht wird konstant auf etwa 860 °C gehalten.

Im Freiraum 5, dem durch die Sekundärluftverteiler 38, 39 heiße Sekundärluft zugeführt wird, verbrennen die vom aufsteigenden Rauchgasstrom mitgeführten Kohleteilchen und die brennbaren gasförmigen Bestandteile. Die Verweilzeit der Partikel im Freiraum beträgt etwa 4 Sekunden. Durch die im Oberfeuer freiwerdende Wärme - rund 40 % der gesamten erzeugten Wärme - erhitzt sich der Rauchgasstrom auf 970 °C. Im oberen Bereich wird die Gastemperatur - und somit auch die Temperatur der mitgeführten Aschepartikel - durch Wärmeabgabe an die Wandflächen und an die Heizflächen 9 auf etwa 400 - 450 °C abgesenkt. Mit dieser Temperatur gelangt das Rauchgas in den Zyklon 11. Dort wird die Flugasche - bestehend aus mitgeführtem inertem Wirbelbettmaterial und Flugkoks - abgetrennt. Sie staut sich in dem Standrohr 12. Die aufgestaute Asche fließt in den Siphon 13 und von dort durch die Überlaufschurre 20 zurück in die Feuerung. Die Durchflußmenge wird durch die über die Leitung 16 zugeführte Luft genau dosiert. Überschüssige Asche wird durch das Ascheabzugssystem 18 zum Aschebunker 19 gefördert. Durch die Kohlezufuhr 21 wird aus einem nicht dargestellten Kohlebunker zerkleinerte Steinkohle mit einer Korngröße bis zu 10 mm zugegeben. Die Massenströme zugeführte Kohle/rückgeführte Flugasche stehen in einem Verhältnis zwischen 1:10 und 1:20. Außerdem wird zwecks Einbindung des Schwefels über nicht dargestellte Einrichtungen Kalk in die Feuerung eingeblasen.

Die Freiraumtemperatur wird stets höher gehalten als die Temperatur der Wirbelschicht 3. Sie läßt sich durch zusätzliche Erhitzung der über die Leitungen 36, 37 zugeführten Sekundärluft beeinflussen. Die Erhitzung der Sekundärluft auf die gewünschte Temperatur geschieht in der Weise, daß von dem durch die Sekundärluftleitung 30 fließenden Hauptstrom der Sekundärluft ein veränderlicher Teilstrom abgezweigt, über den Wärmetauscher 33 geleitet und wieder mit dem Hauptstrom vereinigt wird. Auf diese Weise läßt sich die Temperatur der in den Freiraum 5 eingeblasenen Sekundärluft nach Bedarf bis über 600 °C erhöhen. Da die mit Staub aus der Wirbelschicht 3 ausgetragenen Brennstoffpartikel nach der Funktion

$$exp \, ( - \, A/RT)$$

(A = Aktivierungsenergie; R = Allgemeine Gaskonstante; T = Temperatur) abbrennen, bewirkt eine Temperaturerhöhung der Sekundärluft eine stärkere Anfachung des Oberfeuers. Entsprechend dem relativ großen Potential an Brennstoff im ausgetragenen Staub wird dadurch die Freisetzung von Wärme verstärkt und die Freiraumtemperatur erhöht. Es ist hervorzuheben, daß diese Temperaturerhöhung nicht allein durch die von der heißen Sekundärluft mitgeführte Enthalpie, sondern auch durch die in dem verstärkten Oberfeuer erzeugte Verbrennungswärme bedingt ist.

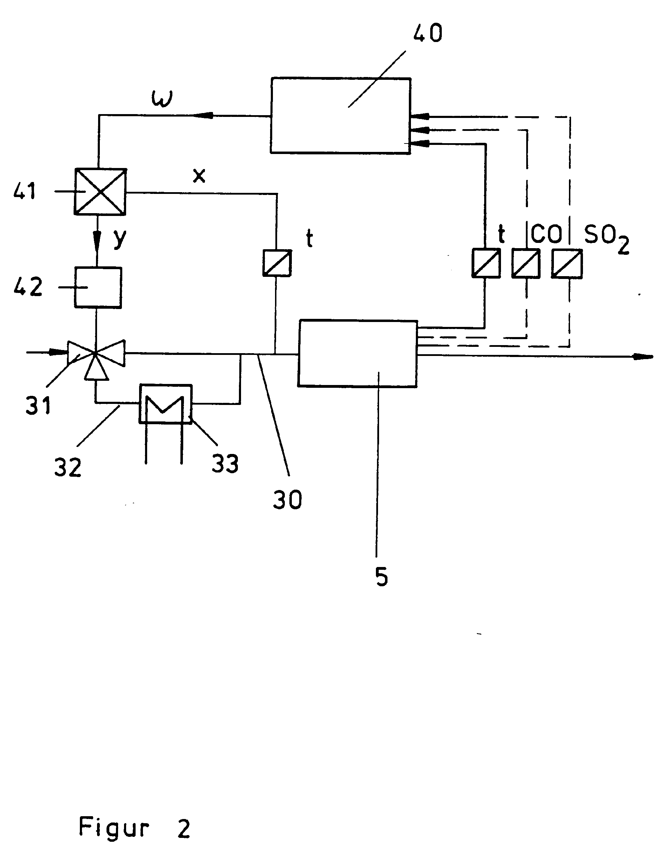

Gemäß Figur 2 wird die Temperatur des Freiraums 5 gemessen und ein entsprechendes Signal über einen Meßwandler dem Prozeßrechner 40 zugeführt. Vorzugsweise werden dem Prozeßrechner 40 über weitere Meßwandler zusätzliche Signale aufgegeben, die den im Freiraum 5 gemessenen Konzentrationen von Kohlenmonoxid und Schwefeldioxid entsprechen. Der Prozeßrechner 40 gibt aufgrund eines mathematischen Prozeßmodells für die Temperatur der Sekundärluft einen Sollwert vor, der einem Regler 41 zugeführt wird. Diesem wird über einen weiteren Meßwandler der in der Sekundärluftleitung 30 stromabwärts der Einmündung der Bypassleitung 32 gemessene Istwert der Sekundärlufttemperatur aufgegeben. Durch Vergleich von Soll- und Istwert bildet der Regler 41 ein Signal, das an den Signalwertumformer 42 weitergeleitet wird. Dieser betätigt das Stellorgan 31.

Falls die Sekundärluft in zwei oder mehr als zwei Ebenen eingeblasen wird, ist es auch möglich, für jede einzelne Ebene die optimale Sekundärlufttemperatur zu berechnen und einzustellen. In diesem Falle ist das Prozeßmodell ebenso wie das zugehörige Regelschema entsprechend auszugestalten.

## Patentansprüche

1. Verfahren zum Verbrennen von festen oder schlammartigen Brennstoffen in einer schwach expandierten Wirbelschicht, wobei
   in dem Freiraum über der Wirbelschicht eine Suspensionsdichte von 1 - 2 kg/m³ aufrechterhalten wird,
   vorgewärmte Luft teils als Primärluft der Wirbelschicht und teils als Sekundärluft dem Freiraum zugeführt wird
   und durch Rückführung eines Teilstroms des abgekühlten Flugstaubs die Wirbelschichttemperatur konstant gehalten wird,
   dadurch gekennzeichnet, daß die Temperatur des über der Wirbelschicht befindlichen Freiraumes durch Beeinflussung der Temperatur der Sekundärluft höher als die Temperatur der Wirbelschicht gehalten wird.

2. Verfahren nach Anspruch 1 zum Verbrennen von Steinkohle, dadurch gekennzeichnet, daß die Temperatur der Wirbelschicht auf 830 - 860 °C und die Temperatur des Freiraums auf 940 - 980 °C gehalten wird.

3. Verfahren nach Anspruch 1 zum Verbrennen von Braunkohle oder Torf, dadurch gekennzeichnet, daß die Temperatur der Wirbelschicht auf 750 - 800 °C und die Temperatur des Freiraums auf 800 - 860 °C gehalten wird.

4. Verfahren nach Anspruch 1 zum Verbrennen von Schlamm oder Müll, dadurch gekennzeichnet, daß die Temperatur der Wirbelschicht auf 820 - 900 °C und die Temperatur des Freiraums auf 860 - 950 °C gehalten wird.

5. Verfahren nach einem der Ansprüche 1 bis 4, dadurch gekennzeichnet, daß ein Teilstrom der Sekundärluft durch Wärmeaufnahme aus der Wirbelschicht auf eine hohe Temperatur erhitzt und mit einem zweiten, kälteren Teilstrom in veränderbarem Mengenverhältnis zusammengeführt wird.

## Claims

1. Method for the combustion of solid or sludge-like fuels in a mildly expanded fluidised bed, wherein a suspension density of 1 to 2 kilograms per cubic metre is maintained in the free space above the fluidised bed, preheated air is fed partly as primary air to the fluidised bed and partly as secondary air to the free space, and the fluidised bed temperature is kept constant through feedback of a partial flow of the cooled-down flue dust, characterised thereby that the temperature of the free space disposed above the fluidised bed is kept higher than the temperature of the fluidised bed by influencing of the temperature of the secondary air.

2. Method according to claim 1 for the combustion of pit coal, characterised thereby that the temperature of the fluidised bed is kept to 830 to 860°C and the temperature of the free space to 940 to 980°C.

3. Method according to claim 1 for the combustion of brown coal or peat, characterised thereby that the temperature of the fluidised bed is kept to 750 to 800°C and the temperature of the free space to 800 to 860°C.

4. Method according to claim 1 for the combustion of sludge or refuse, characterised thereby that the temperature of the fluidised bed is kept to 820 to 900°C and the temperature of the free space to 860 to 950°C.

5. Method according to one of claims 1 to 4, characterised thereby that a partial flow of the secondary air is heated to a high temperature by heat absorption from the fluidised bed and is united with a second, colder partial flow in a variable quantity ratio.

## Revendications

1. Procédé de combustion de combustibles solides ou boueux dans un lit fluidisé à faible expansion, où
   dans l'espace libre situé au-dessus du lit fluidisé est maintenue une densité de suspension comprise entre 1 et 2 kg/m³,
   de l'air préchauffé est amené, en partie à titre d'air primaire à la couche fluidisée et en partie à titre d'air secondaire à l'espace libre,
   la température de la couche fluidisée est maintenue constante par recyclage d'un courant partiel de cendres volantes refroidies,
   caractérisé en ce que la température de l'espace libre se trouvant au-dessus de la couche fluidisée est maintenue supérieure à la température de la couche fluidisée, par action sur la température de l'air secondaire.

2. Procédé selon la revendication 1, pour la combustion de houille, caractérisé en ce que la température de la couche fluidisée est maintenue de 830 à 860°C et la température de l'espace libre est maintenue de 940 à 980°C.

3. Procédé selon la revendication 1, pour la combustion de lignite ou de tourbe, caractérisé en ce que la température de la couche fluidisée est maintenue de 750 à 800°C et la température de l'espace libre est maintenue de 800 à 860°C.

4. Procédé selon ta revendication 1, pour la combustion de boues ou d'ordures, caractérisé en ce que la température de la couche fluidisée est maintenue de 820 à 900°C et la température de l'espace libre est maintenue de 860 à 950°C.

5. Procédé selon l'une des revendications 1 à 4, caractérisé en ce qu'un courant partiel de l'air secondaire est chauffé à une température élevée par absorption de chaleur venant de la couche fluidisée et mélangé, en un rapport modifiable, à un deuxième courant partiel plus froid.

Figur 1

Figur 2